# EUROPÄISCHE PATENTSCHRIFT

(11) **EP 0 632 910 B1**
(45) Veröffentlichungstag und Bekanntmachung des Hinweises auf die Patenterteilung: **20.09.1995**
(21) Anmeldenummer: 93905187.6
(22) Anmeldetag: 15.03.1993
(51) Int. Cl.: G06F 9/44, H04L 29/06, H04Q 11/04

(54) **PROGRAMMGESTEUERTES ISDN-VERMITTLUNGSSYSTEM MIT EINEM NACH PRINZIPIEN OBJEKTORIENTIERTER PROGRAMMIERUNG ERSTELLTEN PROGRAMMODUL ZUR BEHANDLUNG VON WÄHLVERBINDUNGEN**
PROGRAMME-CONTROLLED ISDN SWITCHING SYSTEM WITH A PROGRAM MODULE CONSTRUCTED IN ACCORDANCE WITH THE PRINCIPLES OF OBJECT-ORIENTED PROGRAMMING FOR THE HANDLING OF SWITCHED CALLS
SYSTEME DE COMMUTATION RNIS A COMMANDE PROGRAMMEE COMPORTANT UN MODULE PROGRAMME CONCU SELON DES PRINCIPES DE PROGRAMMATION A ORIENTATION OBJET POUR LE TRAITEMENT D'APPELS COMMUTES

(30) Priorität: 27.03.1992 DE 4210137
(43) Veröffentlichungstag der Anmeldung: 11.01.1995
(73) Patentinhaber: SIEMENS AKTIENGESELLSCHAFT, 80333 München (DE)
(72) Erfinder: GÜNTHER, Wolfgang, D-81476 München (DE); MÄGERL, Gerhard, D-85652 Pliening (DE)
(86) Internationale Anmeldenummer: DE9300233
(87) Internationale Veröffentlichungsnummer: WO9320509

(56) Entgegenhaltungen:
- EP-A- 0 405 829
- EP-A- 0 445 769
- ELEKTRONIK, Heft 22, 26. Oktober 1990, Heft 23, 09. November 1990, Heft 24, 23. November 1990, Heft 25, 07. Dezember 1990, München, Deutschland, D. FRAUNHEIM et al. "Objekt-orientierte Programmierung", Teile 1-4, Seiten 224-234 (1.Teil); Seiten 118-121 (2. Teil); Seiten 80-84 (3. Teil); Seiten 98-103 (4. Teil),
- TELCOM REPORT, 8. Jahrgang, Februar 1985, Sonderheft "Diensteintegrierendes Digitalnetz ISDN", SIEMENS AKTIENGESELLSCHAFT, Berlin, München, H. MITTERER et al. "EWSD - das Vermittlungsystem im ISDN", Seiten 15-21,

## Beschreibung

Bekannte ISDN-Kommunikationssysteme bestehen aus klar umrissenen Funktionsbausteinen mit standardisierten Schnittstellen. Durch eine Funktionenaufteilung auf verschiedene Steuerrechner wird erreicht, daß eine Anpassung an unterschiedliche Aufgaben und die Einführung neuer Funktions- und Leistungsmerkmale ohne Einfluß auf die Systemstruktur bleibt.

In einem Sonderheft "Dientstintegrierendes Digitalnetz ISDN", Telcom Report 8, 1985, Siemens AG, ist als ein solches Kommunikationssystem das "Siemens" Vermittlungssystem "EWSD" in den wesentlichen Punkten beschrieben.

Sowohl die Hardwarestruktur als auch die Softwarestruktur des Vermittlungssystems sind nach modularen Gesichtspunkten gegliedert. Die Software, also die programmtechnische Komponente des Vermittlungssystems kann in die Systemprogrammodule - Betriebssystem, Vermittlungstechnik, Zeichengabeübermittlung, Sicherungstechnik und Betriebstechnik - unterteilt werden.

Während Betriebssystemfunktionen anwendungsunabhängig sind, stellt die Zeichengabeübermittlung ein ISDN-spezifisches Subsystem dar. Das Systemprogrammodul der Vermittlungstechnik erbringt die eigentlichen Leistungen für die Benutzeroberfläche der Endgeräte bzw. für die Schnittstellen zu den verschiedenen Netzen.

Aus der EP-A-0 405 829 ist ein Fernsprechvermittlungssystem bekannt, das mittels unabhängiger, als Objekte bezeichneter Softwarekomponenten implementiert ist. Die Objekte kommunizieren untereinander nur durch Botschaften und symbolische Namen. Ein erstes Objekt, das mit einem anderen Objekt kommunizieren will, teilt dem zur Laufzeit bestehenden System einen ausführbaren Ausdruck, genannt Botschaft, mit. Die Botschaft enthält einen symbolischen Namen und den Methodennamen für das Zielobjekt. Es sind statische und dynamische Objekte vorgesehen, wobei die statischen Objekte die Konfiguration des Vermittlungsamtes definieren und unabhängig von temporären Aktivitäten innerhalb der Vermittlungsstelle sind. Dynamische Objekte werden für eine bestimmte Zeit eingerichtet, z.B. für die Dauer eines Gesprächs. Dabei werden Objekte von dem zur Laufzeit bestehenden System ausgehend von einer festgelegten Komponentenklasse als eine Schablone dafür kreiert, wie das Komponentenexemplar (instance) aufgebaut sein soll. Die Klasse enthält eine Definition des Exemplars von Datenelementen, die von der jeweiligen Komponente verwaltet werden, sowie eine Definition des Satzes von Methoden (Programmtext), die den alleinigen Zugang zu den Exemplardaten haben. Dynamische Objekte werden für einen spezifischen Zweck (z.B. für einen Telefonanruf) kreiert und zerstört, wenn kein Bedarf mehr vorliegt.

Im Bereich des Vermittlungstechnik-Systemprogrammodules kommt es aufgrund von noch zu erwartenden Standardisierungsaktivitäten besonders darauf an, Änderungen und Ergänzungen ohne großen Aufwand vornehmen zu können und dabei die an das System gestellten Echtzeitanforderungen zu erfüllen.

Aufgabe der vorliegenden Erfindung ist es, für ein ISDN-Vermittlungssystem wenigstens das Programmodul für die Vermittlungstechnik derart zu strukturieren, daß Änderungen und Ergänzungen in funktionalen Abläufen mit möglichst geringem Aufwand implementierbar sind und eine Fehlersuche im Vermittlungssystem vereinfacht wird.

Gelöst wird diese Aufgabe erfindungsgemäß durch die im Patentanspruch 1 angegebenen Merkmale.

Die Programmerstellung für die Vermittlungstechnik erfolgt nach den Prinzipien der objektorientierten Programmierung. Nähere Informationen zur objektorientierten Programmierung und deren Prinzipien sind z. B. aus Meyer, B.: "Object-oriented Software Construction", Prentice-Hall, Englewood Cliffs, New York, 1988, oder aus Fraunheim, B. et al: "Objektorientierte Programmierung" (C++-Programmierkurs, Teil 1...Teil 4, Elektronik 1990, Heft 22...25) zu entnehmen.

Anders als bei der herkömmlichen prozeduralen Methode, bei der zwei voneinander getrennte Strukturelemente, nämlich Daten, die irgendwelche Informationen darstellen und Programmprozeduren, bei deren Abarbeitung die Daten manipuliert und zur Informationsver- und -bearbeitung benutzt werden, existieren in einem objektorientierten System nur Strukturelemente, die aus einer Einheit von Daten und Programmprozeduren (Methoden) bestehen, und nach außen hin ein abgeschlossenes Gebilde darstellen. Ein solches Gebilde wird allgemein als Objekt bezeichnet.

Erfindungsgemäß werden als objektbezogene Strukturelemente, d. h. als Klassen, die in Protokollarchitekturen zur Standardisierung verwendeten funktionalen Protokolleinheiten angesehen. Durch die Abbildung von funktionalen Protokolleinheiten auf objektbezogene Strukturelemente (Klassen) läßt sich sicherstellen, daß im Vermittlungssystem die in der Standardisierung vorgeschriebenen vermittlungstechnischen Abläufe eingehalten werden und im Falle von Änderungen der Protokolleinheiten durch zukünftige Standardisierungsmaßnahmen lediglich die betreffende Klasse hinsichtlich ihrer Funktion geändert werden muß.

Sobald eine Anforderung von einem Teilnehmer der Vermittlungstechnik gemeldet wird, die einen Verbindungsaufbau, einen Ruf und/oder eine Signalisierungsabwicklung bewirken soll, wird von den durch die Anforderung betroffenen Strukturelementen (Klassen) jeweils ein Objekt instanziiert, d. h. eine Kopie angefertigt, und im Speicher hinterlegt. Die instanziierten Objekte beinhalten nur die Datenbereiche der zugrundeliegenden objektbezogenen Strukturelemente. Diese Datenbereiche dienen gewissermaßen als Schablone zur Hinterlegung von Verbindungsdaten, die in Zusammenhang mit der die Instanziierung verursachenden Anforderung des Benutzers erstellt werden. Diese Datenbereiche bleiben nur für die Dauer der betreffenden Anforderung bestehen.

Aufgrund der Tatsache, daß auf den Datenbereich einer Klasse bzw. auf ein aus der Klasse instanziiertes Objekt nur die zugrundeliegende Klasse, d. h. deren Programm, zugreifen kann, ist gewährleistet, daß die in einen Datenbereich eingetragenen Verbindungsdaten nicht von anderen Programmodulen oder Klassen überschrieben werden können. Dieser Aspekt vereinfacht die Wartung, insbesondere die Fehlersuche, da zu jeder Anforderung eines Benutzers ein Datenbereich mit Verbindungsdaten erstellt wird, und im Falle von fehlerhaften Verbindungsdaten diese nur von dem zugrundeliegenden Strukturelement (Klasse) erstellt sein können.

Eine vorteilhafte Weiterbildung der Erfindung ergibt sich aus dem Unteranspruch.

Aufgrund der durch die objektorientierte Programmierung möglichen Vererbungsbeziehungen lassen sich für spezielle Anwendungen Unterklassen bilden, wobei deren gemeinsame Abläufe bzw. Attribute weiterhin in dem dann als Oberklasse bezeichneten objektbezogenen Strukturelement gelegt sind. Die Unterklassen erben natürlich den Programmcode der Oberklasse. Der Vorteil dieser Zerlegung in Unterklassen besteht in einer Verringerung des Programmcodes sowie im geringeren Aufwand beim Funktionstest. Durch eine Verwendung von Vererbungsmechanismen und Instanziierung wird der benötigte Programmcode gering gehalten. Entwicklungszeiten verkürzen sich und die Ausführung der programmierten Funktion wird beschleunigt.

Anhand der Zeichnung wird im folgenden ein Ausführungsbeispiel der Erfindung näher erläutert.

Dabei zeigen
- FIG 1: eine CCITT-Protokollarchitektur gemäß den Empfehlungen Q.931 und Q.764,
- FIG 2: eine Protokollarchitektur nach FIG 1 mit zusätzlich zum Ablauf vorgesehenen Klassen,
- FIG 3: eine Darstellung der Hierarchie von Anwendungsklassen, und
- FIG 4: eine Protokollarchitektur nach FIG 2 mit Unterklassen.

Zum besseren Verständnis des Ausführungsbeispiels soll zunächst noch auf einige grundlegende Zusammenhänge eingegangen werden.

Die Vermittlungstechnik-Software, der in einer programmgesteuerten Vermittlungseinrichtung die tragende Funktion zukommt, muß den Standardisierungsanforderungen der CCITT-Empfehlungen für die Teilnehmersignalisierung (DSS1) und für die Netzwerksignalisierung (ISUP) entsprechen.

Bei einer Programmerstellung nach den Prinzipien objektorientierter Programmierung gilt die sogenannte "Klasse" als wichtigstes Strukturelement. Unter einer "Klasse" wird sowohl ein handhabbares Element bei der Übersetzung und zur Programmkonfiguration als auch eine Implementierung eines abstrakten Datentypes verstanden.

Bei der objektorientierten Programmierung muß demnach zunächst stets ermittelt werden, was als "Klasse" definiert werden soll. Es hat sich herausgestellt, daß zu Beginn der Entwicklungsphase Klassen in zwei Gruppen aufzuteilen sind, z. B. in Standardklassen und in Applikationsklassen. Die den Standardklassen zugrundeliegende Aufgabe besteht darin auszuschließen, daß die gleichen grundlegenden Datenstrukturen immer wieder und wieder aufgebaut werden. Die Standardklassen sind damit als Entwicklungswerkzeug des Programmierers anzusehen, genauso wie die Programmiersprache selbst.

Die Applikation-(Anwendungs)klassen repräsentieren funktionale Einheiten, die bezeichnend sind für das jeweilige spezielle Anwendungsgebiet. In einem Vermittlungssystem sind solche funktionellen Einheiten z. B. Teilnehmer, Anschlußeinheit, Durchschalteeinheit oder "Connection Control".

Standardklassen können in einer Vielzahl von unterschiedlichen Softwarekomplexen verwendet werden. Sie stellen Verallgemeinerungen dar, von denen Anwendungsklassen abgeleitet werden können. Es lassen sich zwei Arten von Standardklassen angeben:
- "Generic Standard Classes" sind Schablonen oder Muster für Klassen. Sie erlauben es, Konstanten und Datentypen als "Generic Parameters" festzulegen. Durch Zuweisung von realen Werten zu diesen Parametern können gattungsgleiche Abbilder ("Generic Instances"), also wiederum Klassen, gebildet werden. Durch die Verwendung von "Generic Classes" können die grundlegenden Datenstrukturen formuliert und an den spezifischen Bedarf einer Anwendung angepaßt werden. Beispiele für "Generic Standard Classes" sind z. B. "Table", "Index Table", "1-1 Relation", "List". Ein Beispiel für eine gattungsgleiche Abbildung von "List" ist die Liste aller Bezüge auf alle Verbindungen, die durch einen Anschluß laufen.
- "Virtual Standard Classes" werden benutzt, um Standardschnittstellen für Anwendungsklassen zu spezifizieren. Bei der objektorientierten Programmierung können Informationen zwischen Klassen nur durch Aufruf einer Methode, die in einer Klasse definiert ist, ausgetauscht werden. Deshalb beinhaltet die Spezifikation der Schnittstellen zu den Klassen die Definition aller Faktoren, die für den Aufrufenden der Methoden wichtig ist, z. B. der "Methodenname", die "Parameter" oder die "Parametertypen". In einer Anwendungsklasse wird die Definition der Schnittstelle üblicherweise durch den ausführbaren Programmcode der Methoden vervollständigt. Dieser Programmcode ist jedoch für den Aufrufenden der Klasse nicht sichtbar.

In einer "Virtual Standard Class" sind die Methoden "virtual", d. h. daß die Schnittstellen der Methoden definiert sind, aber die Methoden selbst nicht implementiert sind. Applikationsklassen können von einer "Virtual Standard Class" mittels des Vererbungskonzeptes hergeleitet werden (z. B. durch Bildung einer Unterklasse). Das bedeutet, daß die Schnittstelle der "Virtual Standard Class" (als Oberklasse gesehen) von der Unterklasse komplett geerbt wird.

Da die "Virtual Standard Class" nicht den ausführbaren Code der Methoden enthält, muß dies von der Unterklasse veranlaßt werden.

Beispiele für "Virtual Standard Classes" in der Vermittlungssoftware sind "Timer Event Receiver", "External Event Receiver" oder "Control". Die Klasse "Control" bietet die Methode "Process Signal" an, die damit automatisch von allen Unterklassen von "Control" den "Call Processing Control Units" angeboten wird. Auf die Bedeutung der Anwendungsklassen wird im folgenden eingegangen.

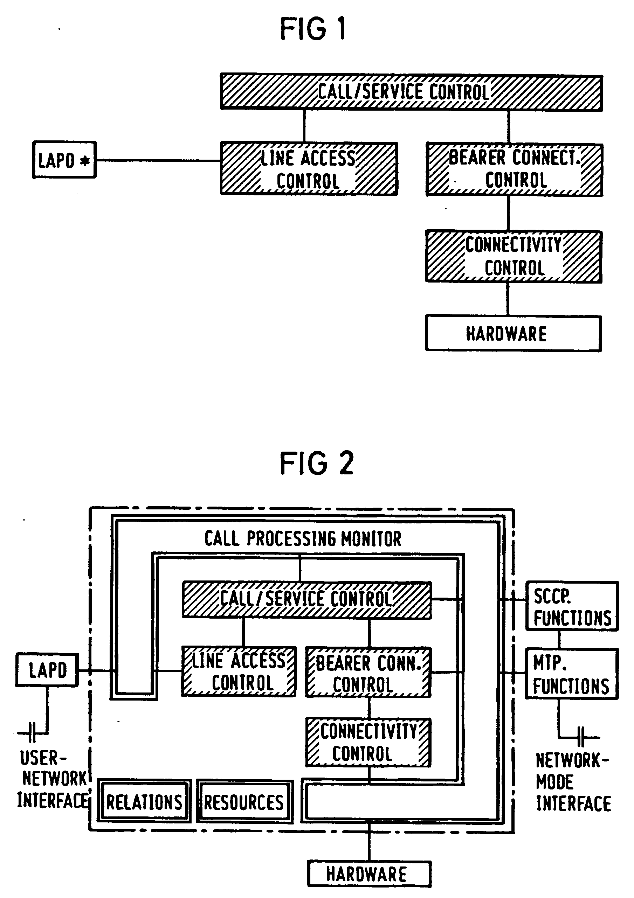

In FIG 1 ist eine Protokollarchitektur mit Protokollbausteinen dargestellt. Die schraffiert abgebildeten Protokollbausteine stellen die aus den CCITT-Empfehlungen abgeleiteten und für die Strukturierung der Vermittlungstechniksoftware eine Rolle spielenden funktionalen Protokolleinheiten dar. Im einzelnen haben diese Protokolleinheiten folgende Funktionen:
- "Q.931-Protocol-Handling" ist verantwortlich für die Protokollbehandlung auf der Teilnehmeranschlußleitung, wie sie in den CCITT-Empfehlungen Q.930/931 für die "Protocol Control" spezifiziert ist. Dabei nimmt "Q.931-Protocol-Handling" nur die Zustände ein, die für die Grundaufgaben des Verbindungsauf- und -abbaus benötigt werden, nicht jedoch die für dienstmerkmalbezogene Aufgaben.
- "Call/Service-Control", im folgenden CSC abgekürzt, enthält die Rufbehandlung. Dazu hat CSC Zugriff zu den Teilnehmerdaten und überprüft Berechtigungen. CSC veranlaßt den Auf- und Abbau von Verbindungen, sowie die Gebührenerfassung. CSC ist der Mittler zwischen der teilnehmerseitigen und der netzseitigen Signalisierung.
- "Bearer Connection Control", im folgenden BCC abgekürzt, wickelt die "Link-by-Link"-Prozeduren des "ISUP" ab, wie sie im Baustein "Call Processing Control" der CCITT-Empfehlung Q.764 spezifiziert sind. Diese Signalisierungsprozeduren werden in Stufe 1 des BISDN nur zur systeminternen Signalisierung zwischen A- und B-Seite verwendet.
- "Connectivity Control", im folgenden CC abgekürzt, steuert den Auf- und Abbau von Verbindungen innerhalb des Vermittlungssystems, d. h. CC führt die Kommunikation mit der Vermittlungstechnik-Peripherie der LTGE und mit dem CP* durch und setzt Einstellbefehle an die vermittlungstechnische Hardware ab. CC verbirgt die Hardwarestruktur des Vermittlungssystems vor anderen Anwendungsklassen der GPE-Vermittlungstechnik.

Bei der Umsetzung in eine objektorientierte Softwarestruktur wird nur im ersten Ansatz jedem dieser Protokollbausteine wenigstens eine Klasse zugeordnet. Die so entstandenen Klassen sind allein noch nicht ablauffähig und auch nicht im Sinne der objektorientierten Programmierung optimiert. Um dies zu erreichen, werden zusätzliche Klassen eingeführt.

In FIG 2 sind die zusätzlich eingeführten Klassen als doppelt umrandete Blöcke abgebildet. Als zusätzliche Klassen dienen
- ein "Call Processing Monitor", der die ankommenden Reize der richtigen Instanz zustellt. Diese Verteilfunktion muß vorhanden sein, weil externe Kommunikationspartner, wie z. B. Endgeräte oder periphere Steuerrechner, die Objektstruktur der Vermittlungstechnik-Software nicht kennen.
- Klassen, die physikalisch oder logisch vorhandene "Resources" des Vermittlungssystems repräsentieren, und
- Klassen, die "Relations" zwischen externen und internen Größen oder nur zwischen internen Größen beschreiben, z. B. diverse Referenzmanager zur Umsetzung logischer auf physikalische Referenzen und umgekehrt.

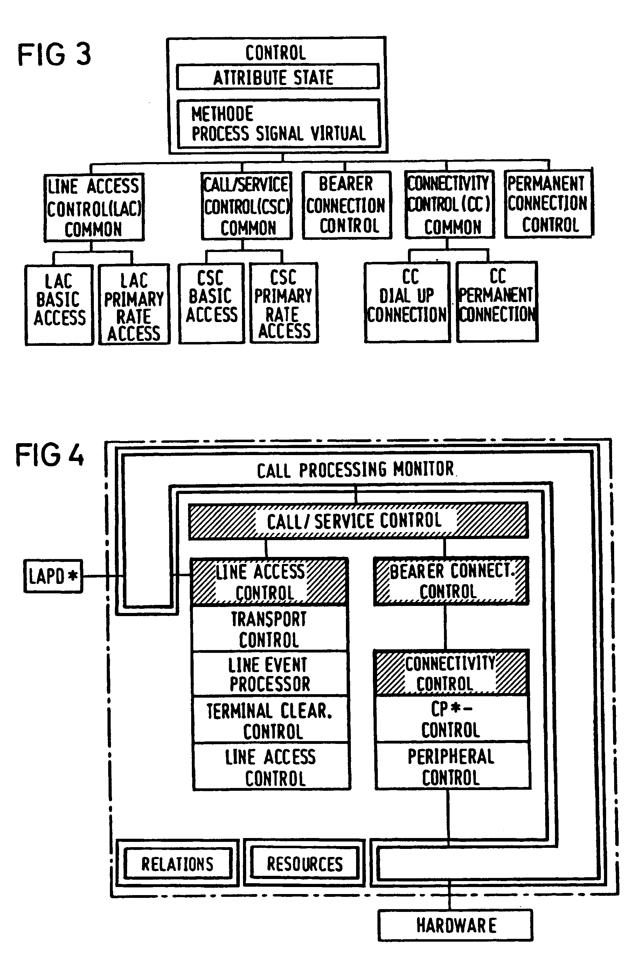

Die Vererbungshierarchie der Klassen in der Vermittlungssoftware ist in FIG 3 dargestellt. Bei der Bildung der Klassenhierarchie wird nach gemeinsamen Faktoren in den Applikationsklassen gesucht und diese gemeinsamen Faktoren in Superklassen zusammengefaßt. Dabei muß sichergestellt sein, daß alle vermittlungstechnischen Kontrolleinheiten, insbesondere die Klassen LAC, CSC, CC und BC, über eine Standardschnittstelle erreicht werden können. Deshalb wurde die virtuelle Standardklasse "Control" als Superklasse für alle Kontrolleinheiten implementiert. Mit dem Vererbungskonzept lassen sich alle instanziierten Objekte der Unterklasse "Control" so ansprechen bzw. adressieren, als ob sie selber instanziierte Objekte von "Control" wären. Diese Beziehung wird als Polymorphismus bezeichnet. Zu den Klassen LAC, CSC und CC sind mehrere Varianten, d. h. Unterklassen, eingerichtet. LAC und CSC haben jeweils eine "Basic Access"- und eine "Primary Rate Access"-Variante. CC weist eine "Dial-up Connection"- und eine "Permanent Connection"-Variante auf. Da die Varianten einer Klasse üblicherweise einen gemeinsamen Programmcode und Daten aufweisen, werden diese aus den Varianten entfernt und in eine neu erstellte Superklasse übertragen. Die ursprünglich erstellten Klassen beinhalten dann nur noch Sequenzen und Daten, die spezifisch für die jeweilige Variante sind. Ein Teil der aus der Protokollarchitektur abgeleiteten Protokollbausteine kann weiter zerlegt, d. h. auf mehrere Klassen abgebildet, werden.

In FIG 4 ist dargestellt, wie die Protokollbausteine "Line Access Control" und "Connectivity Control" weiter zerlegt, d. h. auf mehrere Klassen abgebildet, werden. Der Protokollbaustein "Line Access Control" wird dann durch folgende Klassen repräsentiert:
- "Transport Control", die die Nutzung der Schicht 2-Verbindungen durch die Schicht 3 verwaltet,
- "Line Event Processor", die die Bearbeitung von Ereignissen übernimmt, die alle oder eine bestimmte Auswahl von Rufen einer Schicht 2-Verbindung betreffen,
- "Terminal Clearing Control", die das Protokoll zum Auslesen der bei einer Rufzuteilung nicht berücksichtigten Endgeräte auf der B-Seite abwickelt, und
- "Line Access Control", die die übrigen Funktionen des Q.931-Protokolls abwickelt.

Der Protokollbaustein "Connectivity Control" wird durch folgende zwei Klassen repräsentiert:
- "Peripheral Control", die die Kommunikation mit der Vermittlungstechnik-Peripherie des Systems durchführt, und
- "CP* Control", die die Kommunikation mit der Vermittlungstechnik im virtuellen Prozessor CP* durchführt.

Wie bereits im Zusammenhang mit FIG 3 erwähnt, werden die Möglichkeiten für Vererbungsbeziehungen ermittelt und genutzt, d. h. es werden Unterklassen für spezielle Anwendungen gebildet und deren gemeinsame Abläufe bzw. Attribute in eine Oberklasse gelegt.

Der Protokollbaustein "Call/Service Control" wird z. B. durch zwei Klassen repräsentiert, von denen eine erste eine Unterklasse zur Rufbehandlung eines ATM-Teilnehmers und eine Unterklasse zur Rufbehandlung einer ATM-Nebenstellenanlage aufweist. Die Gemeinsamkeiten bei der Rufbehandlung von ATM-Teilnehmer und ATM-Nebenstellenanlage sind in der ersten Klasse enthalten.

Von der zur Repräsentation des Protokoll-Bausteins "Call/Service Control" vorgesehenen zweiten Klassen existiert genau ein statisches Objekt, das am Aufbau eines Rufes auf der B-Seite mitwirkt. Dieses statische Objekt führt die Rufnummernbewertung durch, um entscheiden zu können, ob ein Teilnehmer mit der vorliegenden B-Rufnummer existiert. Falls ein solcher Teilnehmer existiert, dann instanziiert dieses statische Objekt die passende Unterklasse, also entweder die zur Rufbehandlung eines ATM-Teilnehmers oder die zur Rufbehandlung einer ATM-Nebenstellenanlage. Falls kein solcher Teilnehmer existiert, dann löst das statische Objekt die Verbindung aus. Dadurch wird einerseits erreicht, daß die Trennung zwischen den beiden Unterklassen erhalten bleibt und andererseits der "Bearer Connect Control" nicht mit Informationen über die Art des Teilnehmeranschlusses belastet wird. Weiterhin ist vorgesehen, daß das statische Objekt außerdem den Fall behandeln muß, daß auf der B-Seite anhand der vorliegenden unvollständigen Rufnummer des B-Seite nicht entschieden werden kann, ob es einen Teilnehmeranschluß mit dieser Rufnummer gibt oder nicht.

## Patentansprüche

1. ISDN-Vermittlungssystem mit einem nach Prinzipien objektorientierter Programmierung erstellten Systemprogrammodul zur Behandlung von Wählverbindungen, bei dem die in Protokollarchitekturen zur Standardisierung funktionaler vermittlungstechnischer Abläufe verwendeten Protokollbausteine als objektbezogene Strukturelemente repräsentiert sind, die Klassen im Sinne der objektorientierten Programmierung darstellen und von denen zu Verbindungen und/oder zu Rufen und/oder zu Signalisierungsabwicklungen Objekte instanziiert werden, wobei jeweils von dem zum betreffenden Strukturelement gehörenden Datenbereich eine Kopie im Datenspeicher im Sinne einer Schablone eingerichtet wird, in der verbindungs- bzw. ruf- bzw. signalisierungsindividuelle Daten eingetragen werden und die nur für die Dauer einer betreffenden Verbindung bzw. eines betreffenden Rufes bzw. einer betreffenden Signalisierungsabwicklung bestehen bleibt.

2. ISDN-Vermittlungssystem nach Anspruch 1,
**dadurch gekennzeichnet,**
daß Protokollbausteine jeweils durch mehrere Strukturelemente repräsentiert sind, auf denen gemeinsame Programmsequenzen und Daten in einem hierarchisch übergeordneten Strukturelement zusammengefaßt sind.

## Claims

1. ISDN switching system with a system program module constructed in accordance with the principles of object-oriented programming for the handling of switched connections, in which the protocol modules used in protocol architectures for the standardization of functional switching procedures are represented as object-oriented structural elements which represent classes in the sense of object-oriented programming and of which objects are instantiated for connections and/or for calls and/or for signalling operations, a copy of the data area belonging to the structural element concerned being in each case set up in the data store as a kind of pattern, in which data individual to the connection or call or signalling are entered and which remains in existence only for the duration of a connection concerned or a call concerned or a signalling operation concerned.

2. ISDN switching system according to Claim 1, characterized in that protocol modules are in each case represented by a plurality of structural elements on which common program sequences and data are combined in a hierarchically higher-level structural element.

## Revendications

1. Système de commutation RNIS comportant un module de programme du système, qui est établi selon des principes de programmation orientée objet, qui est destiné au traitement de connexions commutées et dans lequel les composantes d'un protocole utilisées dans des architectures du protocole pour normaliser des opérations techniques fonctionnelles de commutation sont représentées par des éléments de structure concernant un objet, qui représentent des classes dans le sens de la programmation orientée objet et parmi lesquelles des objets sont instanciés en connexions et/ou en appels et/ou en déroulements de signalisation, une copie de chaque domaine de données faisant partie de l'élément de structure concerné étant établie dans la mémoire de données dans le sens d'un gabarit, dans lequel des données propres à une connexion, appel ou signalisation sont mises et qui ne reste établi que pendant la durée d'une liaison concernée ou d'un appel concerné ou d'un déroulement concerné de signalisation.

2. Système de commutation RNIS suivant la revendication 1, caractérisé en ce que des composantes du protocole sont représentées chacune par plusieurs éléments de structure, dans lesquels des séquences de programmes communes et des données communes sont rassemblées en un élément de structure d'ordre hiérarchique supérieur.
